# DEMANDE DE BREVET EUROPEEN

(11) **EP 4 530 132 A1**
(43) Date de publication de la demande: **02.04.2025**
(21) Numéro de dépôt: 24203265.4
(22) Date de dépôt: 27.09.2024
(51) Int. Cl.: B60R 19/02, B60R 19/18

(54) **ENSEMBLE POUR SOUTIEN D'UN BOUCLIER D'UN VÉHICULE AUTOMOBILE**

(30) Priorité: 27.09.2023 FR 2310297
(71) Demandeur: Renault s.a.s, 92100 Boulogne Billancourt (FR)
(72) Inventeur: FERIN, Julien, 78280 GUYANCOURT (FR)

(57) **Abrégé**

Ensemble pour soutien d'un bouclier d'un véhicule automobile, l'ensemble comprenant un bouclier d'un véhicule automobile et une structure rigide du véhicule automobile, caractérisé en ce que le bouclier comprend une partie saillante orientée vers l'intérieur du véhicule, la partie saillante étant apte à collaborer avec la structure rigide pour limiter un déplacement du bouclier selon un axe vertical terrestre dirigé vers le sol, notamment lorsque le véhicule roule dans un nid-de-poule.

## Description

L'invention concerne un ensemble pour soutien d'un bouclier d'un véhicule automobile. L'invention porte également sur un véhicule équipé d'un tel ensemble.

La face avant d'un véhicule comprend classiquement un bouclier avant, le bouclier étant fixé sur des éléments d'aile latérale du véhicule disposés sur les côtés droit et gauche du véhicule.

Lors du roulage du véhicule, le bouclier peut subir des accélérations verticales importantes liées à la présence d'irrégularités dans la surface de la route, notamment liées à la présence de nids de poule. De plus, les accélérations verticales subies par le bouclier peuvent être amplifiées par le poids du bouclier. Sous l'effet des accélérations verticales qu'il subit, le bouclier peut se déplacer verticalement vers le sol. Or un déplacement vertical trop important du bouclier peut entrainer une détérioration du bouclier ; de plus le déplacement vertical du bouclier peut entrainer un décrochage de la liaison entre le bouclier et une aile du véhicule.

Le but de l'invention est de fournir un ensemble pour soutien d'un bouclier remédiant aux inconvénients ci-dessus et améliorant les ensembles pour soutien d'un bouclier connus de l'art antérieur. En particulier, l'invention permet de réaliser un ensemble pour soutien d'un bouclier qui soit simple et fiable et qui permette au bouclier de subir des accélérations verticales sans que cela n'entraine une détérioration ou un décrochage du bouclier.

A cet effet, l'invention porte sur un ensemble pour soutien d'un bouclier d'un véhicule automobile, l'ensemble comprenant un bouclier d'un véhicule automobile et une structure rigide du véhicule automobile, le bouclier comprenant une partie saillante orientée vers l'intérieur du véhicule, la partie saillante étant apte à collaborer avec la structure rigide pour limiter un déplacement du bouclier selon un axe vertical terrestre dirigé vers le sol, notamment lorsque le véhicule roule dans un nid-de-poule.

Dans un mode de réalisation, le bouclier comprend une zone de fixation d'un équipement, notamment un boîtier électronique de gestion d'un éclairage d'un optique du véhicule automobile, et un poids de l'équipement amplifie un déplacement du bouclier selon l'axe vertical terrestre dirigé vers le sol.

Dans un mode de réalisation, la partie saillante est disposée à proximité de la zone de fixation.

Dans un mode de réalisation, lorsque le véhicule automobile ne subit pas d'accélération verticale, une distance donnée sépare une première surface de la partie saillante et une deuxième surface de la structure rigide,
et, lorsque le bouclier se déplace verticalement vers le sol, d'une distance égale à la distance donnée, la première surface est en appui sur la deuxième surface.

Dans un mode de réalisation, la distance donnée est supérieure ou égale à 1 millimètre, voire supérieure ou égale à 2 millimètres, voire supérieure ou égale à 3 millimètres.

Dans un mode de réalisation, la première surface et la deuxième surface sont sensiblement parallèles entre elles et/ou parallèles à un plan comprenant un axe longitudinal du véhicule automobile et un axe latéral du véhicule automobile.

Dans un mode de réalisation, la première surface est une face inférieure de la partie saillante ou la première surface est une surface inférieure d'une nervure réalisée sur une face inférieure de la partie saillante.

Dans un mode de réalisation, une totalité des surfaces de la partie saillante délimite un volume fermé.

Dans un mode de réalisation, la structure rigide est un support de fixation d'un optique du véhicule automobile.

L'invention porte en outre sur un véhicule automobile comprenant un ensemble selon l'invention.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
La figure 1 représente schématiquement un véhicule automobile équipé d'un ensemble selon l'invention.
La figure 2 définit un repère orthonormé du véhicule automobile.
La figure 3 est une première vue en perspective d'un mode de réalisation d'un ensemble selon l'invention.
La figure 4 est une deuxième vue en perspective d'un mode de réalisation d'un ensemble selon l'invention.
La figure 5 est une troisième vue en perspective d'un mode de réalisation d'un ensemble selon l'invention.
La figure 6 est une quatrième vue en perspective d'un mode de réalisation d'un ensemble selon l'invention.
La figure 7 est une première vue détaillée d'un mode de réalisation d'une équerre de contre-lame d'un bouclier d'un ensemble selon l'invention.
La figure 8 est une deuxième vue détaillée d'un mode de réalisation d'une équerre de contre-lame d'un bouclier d'un ensemble selon l'invention.
La figure 9 est une première vue détaillée d'un mode de réalisation d'une structure rigide d'un ensemble selon l'invention.
La figure 10 est une deuxième vue détaillée d'un mode de réalisation d'une structure rigide d'un ensemble selon l'invention.
La figure 11 est une vue interne d'un environnement d'un bouclier d'un ensemble selon l'invention
La figure 12 illustre un déplacement d'un bouclier d'un ensemble selon l'invention.
La figure 13 illustre une zone de contact entre un bouclier et une structure rigide d'un ensemble selon l'invention lors d'un déplacement vertical du bouclier.

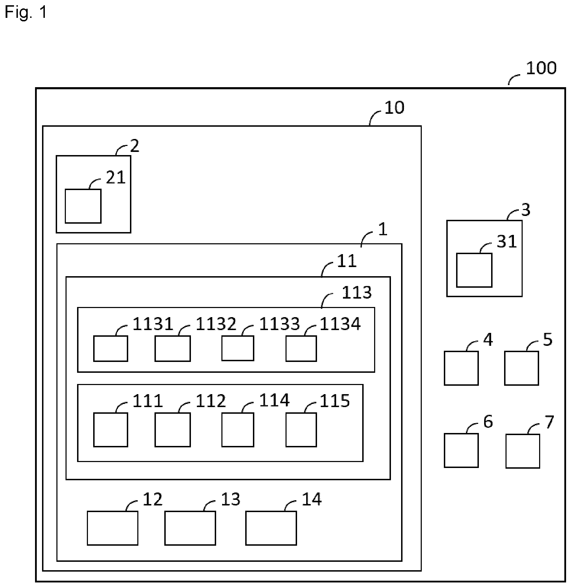

Un mode de réalisation d'un véhicule automobile 100 est décrit ci-après en référence à la figure 1. Le véhicule automobile 100 considéré peut être de tout type. Par exemple, le véhicule 1 peut être à motorisation thermique, électrique ou hybride. Egalement, le véhicule 1 peut être un véhicule particulier, utilitaire ou dédié aux transports en commun.

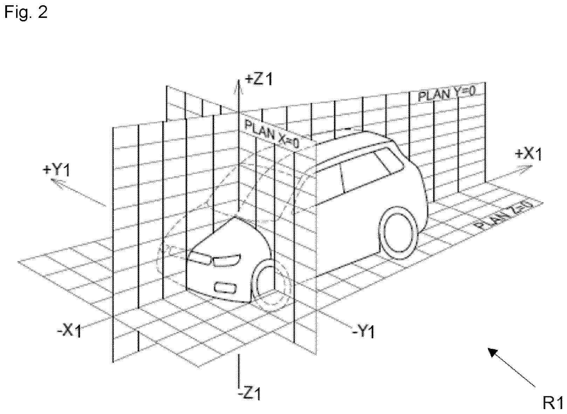

En référence à la figure 2, on définit un premier repère orthonormé R1 attaché au véhicule automobile 100 :
- L'axe dit premier axe longitudinal X1, ou axe longitudinal X1, du véhicule automobile 100 est défini comme un axe de symétrie du véhicule parallèle à l'axe selon lequel le véhicule se déplace en ligne droite, orienté vers l'arrière du véhicule.
- L'axe dit premier axe latéral Y1, ou axe latéral Y1, du véhicule automobile 100 est perpendiculaire à l'axe longitudinal X1, déterminant avec l'axe X1 un plan X1Y1 parallèle à la surface sur laquelle le véhicule se déplace. L'axe latéral Y1 est orienté vers la droite du véhicule, la gauche et la droite étant définies selon le point de vue du conducteur.
- L'axe dit premier axe vertical Z1 du véhicule automobile 100 est perpendiculaire aux axes X1 et Y1 et est orienté vers le haut du véhicule automobile 100.

De plus dans la suite du document on fait également référence à un deuxième repère orthonormé R2 comprenant un axe vertical terrestre Z2 passant par le centre de la Terre, et représentant la direction de la pesanteur au point où se situe le véhicule automobile 100.

Egalement, on entend, par « intérieur », le côté le plus proche d'un compartiment avant 2 du véhicule 1, aussi qualifié de face avant, dans lequel est disposé un groupe motopropulseur du véhicule 1. De la même manière, on entend par « extérieur » le côté opposé à l'intérieur du compartiment avant 2 du véhicule 1, c'est-à-dire le plus proche d'un environnement extérieur au véhicule 1. Les termes « supérieur », « inférieur », « haut » et « bas » s'appliquent dans leur sens usuel, « inférieur » et « bas » étant indicatifs d'une plus grande proximité, le long de la direction verticale Z1, avec un sol sur lequel repose le véhicule 1. Enfin, les termes « premier » et « deuxième » ont vocation à distinguer des composants similaires et non à établir une hiérarchie au sein de l'invention.

Le véhicule automobile comprend un ensemble 10 pour soutien d'un bouclier d'un véhicule automobile, comprenant un bouclier 1 du véhicule et une structure rigide 2 du véhicule. Le bouclier 1 comprend une partie saillante 113 orientée vers l'intérieur du véhicule automobile 100, la partie saillante 113 étant apte à collaborer avec la structure rigide 2 pour limiter un déplacement du bouclier 1 selon l'axe vertical terrestre Z2 dirigé vers le sol, notamment lorsque le véhicule roule dans un nid-de-poule.

Dans un mode de réalisation plus spécifiquement décrit dans ce document, le bouclier 1 est un bouclier avant rattaché aux deux ailes avant 4 du véhicule automobile 100, notamment par l'intermédiaire de pièces de liaison 5.

Dans le mode de réalisation décrit, sur au moins une partie de sa surface, le bouclier 1 comprend deux couches distinctes assemblées l'une contre l'autre : une contre-lame 11 et une première peau 12. La contre-lame 11 peut également être nommée deuxième peau 11.

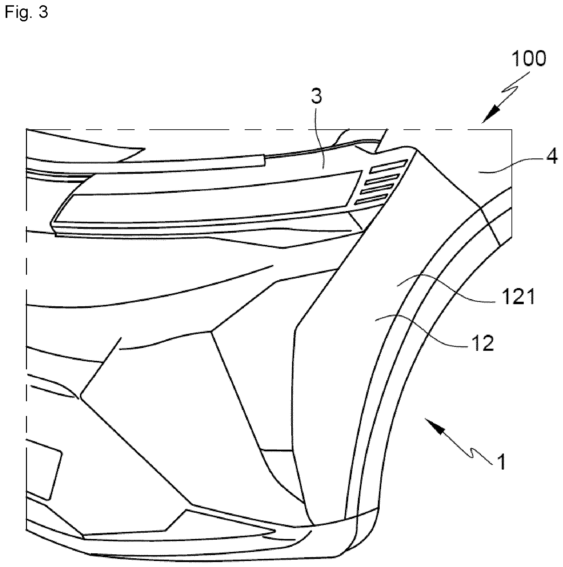

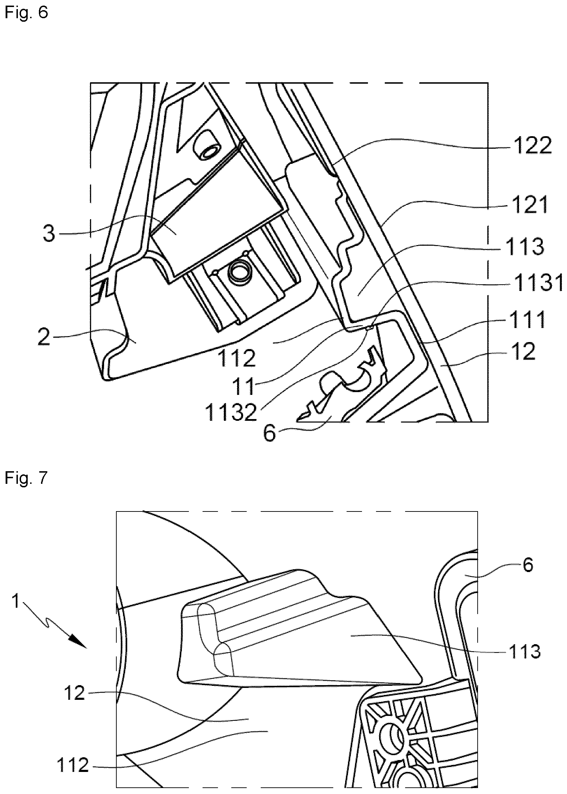

Dans le mode de réalisation illustré par les figures 3 à 13, la partie saillante 113 est formée dans la surface de la contre-lame 11, par exemple par extrusion. La partie saillante est sensiblement de forme prismatique, et présente un ensemble de surfaces planes reliées entre elles. Avantageusement, les différentes surfaces de la partie saillante 113 forment ensemble un volume fermé, ce qui augmente la résistance à la déformation de la partie saillante 113.

La première peau 12 du bouclier 1 est une couche de matériau souple, comprenant une première face 121 orientée vers l'extérieur du véhicule, et une deuxième face 122 orientée vers l'intérieur du véhicule.

La contre-lame 11 est réalisée par une couche d'un matériau plus rigide que la première peau 12. La contre-lame 11 a pour rôle de renforcer certaines zones du bouclier 1. La contre-lame 11 doit toutefois présenter une certaine élasticité pour éviter qu'une accélération verticale subie par le véhicule automobile 100 n'entraine un décrochage entre le bouclier 1 et une pièce de liaison 5 qui relie le bouclier à une aile 4.

Une première face 111 de la contre-lame 11 est orientée vers l'extérieur du véhicule et est fixée contre au moins une partie de la deuxième face 122 de la première peau 12. Une deuxième face 112 de la contre-lame 11 est orientée vers l'intérieur du véhicule automobile 100.

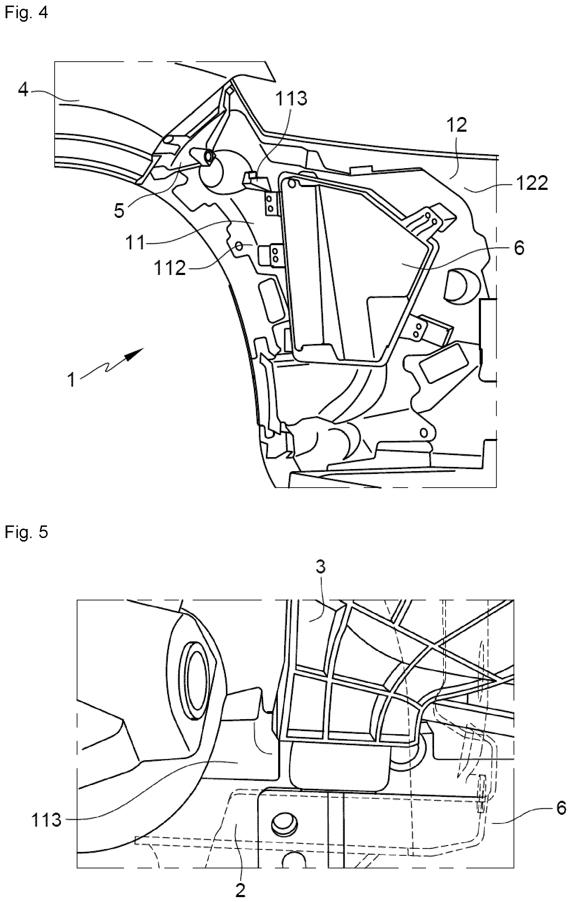

De plus, le bouclier 1 comprend une zone de fixation 114 d'un équipement 6, et un poids de l'équipement 6 amplifie un déplacement du bouclier 1 selon l'axe vertical terrestre Z2 dirigé vers le sol. Par exemple, dans un mode de réalisation illustré par la figure 4, la deuxième face 112 de la contre-lame fournit une surface pour la fixation d'un boîtier électronique 6 de gestion d'un éclairage des feux de jour, également nommé boîtier DRL ou boîtier 6 dans la suite du document.

Ainsi, dans le mode de réalisation décrit, le bouclier 1 est alourdi par la présence du boîtier 6 fixé sur la contre-lame 11. La charge pondérale supplémentaire apportée par le boîtier 6 accentue l'accélération verticale subie par le bouclier 1 lors d'un roulage du véhicule dans un nid-de-poule.

Afin de limiter le déplacement vertical du bouclier 1, une partie saillante 113 orientée vers l'intérieur du véhicule automobile 100 a été créée dans la contre-lame 11. La partie saillante 113 est également nommée équerre 113 dans la suite du document. La partie saillante 113 est apte à collaborer avec une structure rigide 2 du véhicule automobile, pour limiter un déplacement vertical du bouclier 1 vers le sol, notamment lorsque le véhicule roule dans un nid-de-poule. Dans ce cas la partie saillante 113 vient en appui contre la structure rigide 2.

Dans un mode de réalisation avantageux, la partie saillante 113 est localisée à proximité de l'équipement lourd 6, c'est-à-dire à proximité du boîtier 6. De cette façon, la force exercée par le poids du boîtier 6 sur le bouclier 1 s'exerce au plus proche du point d'appui entre la partie saillante 113 et la structure rigide 2. En limitant la distance entre le point d'appui et la zone où s'exerce la force de pesanteur générée par le boîtier 6, on limite les mouvements d'oscillation du boitier 6, qui pourraient être facilités par l'élasticité de la contre-lame 11.

La partie saillante 113 peut également être avantageusement placée à proximité d'une pièce de liaison 5 disposée entre une aile 4 et le bouclier 1, la proximité entre la partie saillante 113 et la pièce de liaison 5 permettant de limiter un risque de décrochage entre la pièce de liaison 5 et le bouclier 1.

Dans la suite du document, on décrit un bouclier 1 équipé d'une partie saillante 113. Avantageusement, le bouclier 1 est équipé de deux parties saillantes 113 disposées sensiblement symétriquement par rapport à un plan vertical contenant les axes X1 et Z1 du véhicule automobile 100.

Dans le mode de réalisation décrit par les figures 5, 6 et 8 à 13, la structure rigide 2 est fournie par un support de fixation 2 d'un optique 3 du véhicule automobile 100. Dans la suite du document, le support de fixation 2 est nommé support 2.

Le support 2 est réalisé dans un matériau résistant et rigide, par exemple en métal.

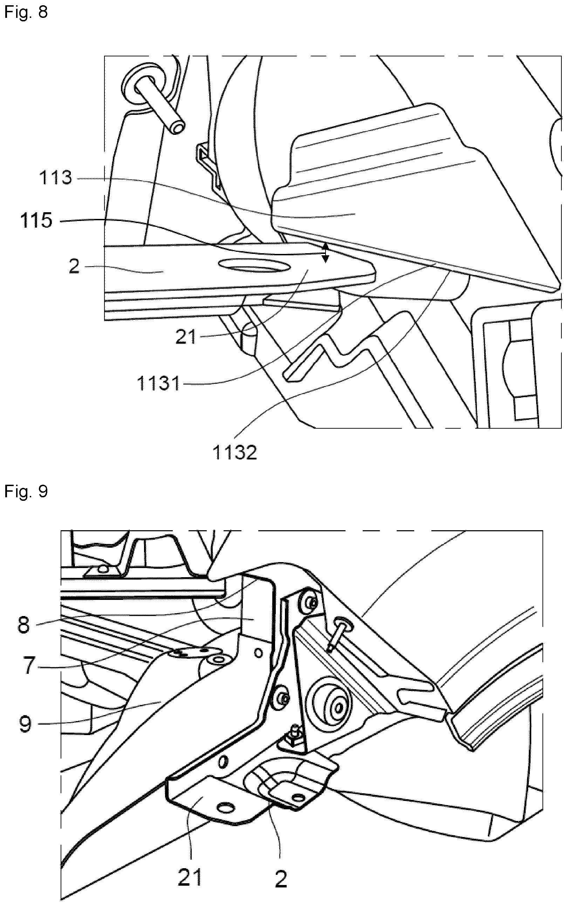

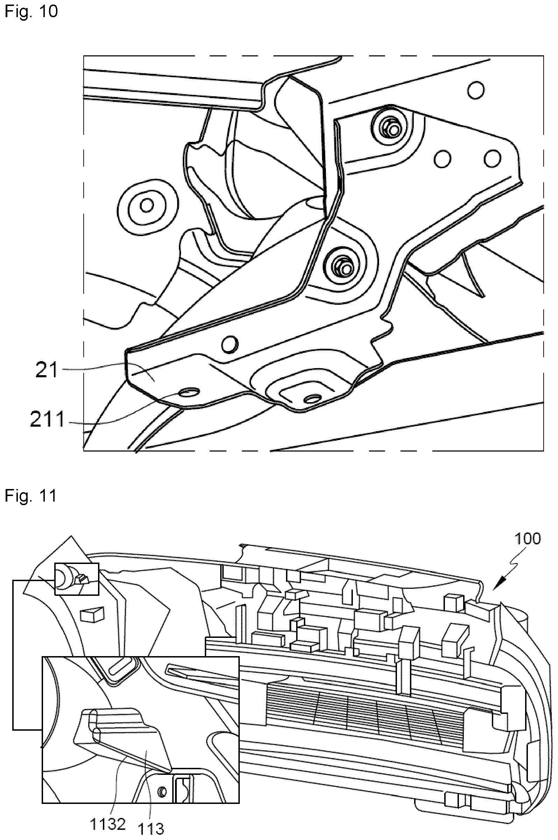

Comme cela est plus spécifiquement visible sur les figures 9 et 10, le support 2 est solidement fixé à la caisse du véhicule automobile 100, notamment par l'intermédiaire d'une structure 7 de pied avant du véhicule, et par l'intermédiaire d'un renfort 8 de structure de pied avant. Le support 2 est en outre fixé à une structure 9 pour le passage d'une roue avant.

Dans le mode de réalisation décrit, le support 2 comprend une première surface 21 comprenant un trou 211 pour la fixation de l'optique 3. La première surface 21 comprend en outre une portion de surface libre 212, qui est une portion de surface laissée libre, c'est-à-dire non occupée, par un optique 3, lorsque celui-ci est fixé au support 2.

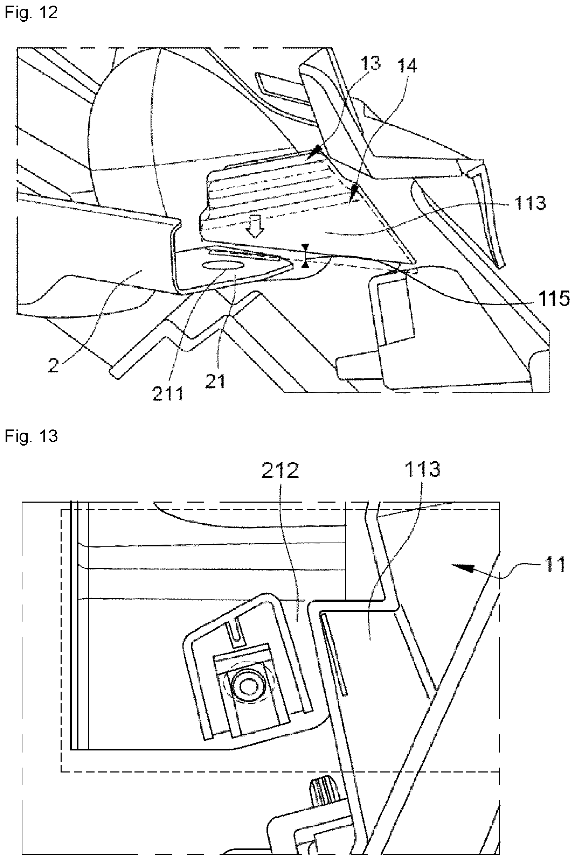

La portion de surface libre 212 est plus spécifiquement visible dans la figure 13. Bien que réduite, la portion de surface libre 212 est suffisante pour fournir une zone d'appui pour la partie saillante 113 du bouclier 1.

Lorsque le véhicule automobile ne subit pas d'accélération verticale, une distance donnée 115, mesurée selon un axe vertical Z1 du véhicule automobile 100, sépare une première surface 1131 de la partie saillante 113 et une deuxième surface 21 de la structure rigide 2. Le bouclier 1 se trouve alors dans une position 13 dite haute.

De plus, lorsque le bouclier 1 se déplace d'une distance -mesurée selon l'axe vertical Z1 du véhicule automobile- égale à la distance donnée 115, la première surface 1131 est en appui sur la deuxième surface 21. Le bouclier se trouve alors dans une position 14 dite basse.

Les positions haute et basse 13, 14 et la distance donnée 115 sont plus spécifiquement visibles sur la figure 12.

Avantageusement, la distance 115 est définie de sorte à faciliter le montage du véhicule, tout en limitant suffisamment le déplacement vertical du bouclier 1 de sorte à empêcher un décrochage ou une dégradation du bouclier 1. Dans un mode de réalisation, la distance donnée 115 est égale à 1 millimètre, voire égale à 2 millimètres, voire égale à 3 millimètres.

Dans un mode de réalisation, la première surface 1131 et la deuxième surface 21 sont sensiblement parallèles entre elles, de sorte à maximiser une surface de contact entre la partie saillante 113 et la structure rigide 2. Dans un mode de réalisation avantageux, la première surface 1131 et la deuxième surface 21 sont en outre sensiblement parallèles à un plan comprenant un axe longitudinal X1 du véhicule automobile et un axe latéral Y1 du véhicule automobile 100. La force exercée par la partie saillante 113 est ainsi répartie de façon optimale sur la structure rigide 2.

Différents modes de réalisation de la première surface sont envisageables. Dans un mode de réalisation, la première surface 1131 est une face inférieure 1134 de la partie saillante 113. Alternativement, la première surface 1131 est une surface inférieure 1133 d'une nervure 1132 réalisée sur la face inférieure 1134 de la partie saillante 113. Le terme « inférieur » fait ici référence au repère R1 attaché au véhicule automobile 100. Notamment, le terme « inférieur » est indicatif d'une plus grande proximité, le long de la direction verticale Z1, avec un sol sur lequel repose le véhicule automobile 100.

Des essais par modélisation ont été réalisés pour évaluer l'efficacité d'un dispositif de soutien selon l'invention lors de l'application d'une accélération verticale de 10 g au bouclier, l'accélération étant appliquée selon une direction verticale du repère terrestre R2. Deux modes de réalisation d'un dispositif de soutien ont été modélisés : un premier mode de réalisation dans lequel la distance donnée 115 (entre la partie saillante 113 et la structure rigide 2) est égale à 1 millimètre, et un deuxième mode de réalisation dans lequel la distance donnée 115 est égale à 3 millimètres.

Les simulations ont montré que les premier et deuxième modes de réalisation du dispositif de soutien permettent de réduire significativement les risques d'endommagement du bouclier 1 lorsque le pare-chocs subit une accélération verticale de 10 g.

## Revendications

1. Ensemble (10) pour soutien d'un bouclier d'un véhicule automobile, l'ensemble (10) comprenant un bouclier (1) d'un véhicule automobile et une structure rigide (2) du véhicule automobile, **caractérisé en ce que** le bouclier (1) comprend une partie saillante (113) orientée vers l'intérieur du véhicule, la partie saillante (113) étant apte à collaborer avec la structure rigide (2) pour limiter un déplacement du bouclier (1) selon un axe vertical terrestre dirigé vers le sol, notamment lorsque le véhicule roule dans un nid-de-poule.

2. Ensemble (10) selon la revendication précédente, **caractérisé en ce que** le bouclier comprend une zone de fixation (114) d'un équipement (6), notamment un boîtier électronique (6) de gestion d'un éclairage d'un optique du véhicule automobile (100), et **en ce qu'**un poids de l'équipement (6) amplifie un déplacement du bouclier (1) selon l'axe vertical terrestre dirigé vers le sol.

3. Ensemble (10) selon la revendication précédente, **caractérisé en ce que** la partie saillante (113) est disposée à proximité de la zone de fixation (114).

4. Ensemble (10) selon l'une des revendications précédentes, **caractérisé en ce que**,
lorsque le véhicule automobile ne subit pas d'accélération verticale, une distance donnée (115) sépare une première surface (1131) de la partie saillante (113) et une deuxième surface (21) de la structure rigide (2),
et **en ce que**, lorsque le bouclier (1) se déplace verticalement vers le sol, d'une distance égale à la distance donnée (115), la première surface (1131) est en appui sur la deuxième surface (21).

5. Ensemble (10) selon la revendication précédente, **caractérisé en ce que** la distance donnée (115) est supérieure ou égale à 1 millimètre, voire supérieure ou égale à 2 millimètres, voire supérieure ou égale à 3 millimètres.

6. Ensemble (10) selon l'une des revendications 4 ou 5, **caractérisé en ce que** la première surface (1131) et la deuxième surface (21) sont sensiblement parallèles entre elles et/ou parallèles à un plan comprenant un axe longitudinal (X1) du véhicule automobile et un axe latéral (Y1) du véhicule automobile (100).

7. Ensemble (10) selon l'une des revendications 4 à 6, **caractérisé en ce que** la première surface (1131) est une face inférieure (1134) de la partie saillante (113) ou **en ce que** la première surface (1131) est une surface inférieure d'une nervure (1132) réalisée sur une face inférieure (1134) de la partie saillante (113).

8. Ensemble (10) selon l'une des revendications précédentes, **caractérisé en ce qu'**une totalité des surfaces de la partie saillante (113) délimite un volume fermé.

9. Ensemble (10) selon l'une des revendications précédentes, **caractérisé en ce que** la structure rigide (2) est un support de fixation d'un optique du véhicule automobile (100).

10. Véhicule automobile (100) comprenant un ensemble (90) selon l'une des revendications précédentes.
